# EUROPEAN PATENT SPECIFICATION

(11) **EP 1 029 728 B1**
(45) Date of publication and mention of the grant of the patent: **02.05.2003**
(21) Application number: 00103050.1
(22) Date of filing: 15.02.2000
(51) Int. Cl.: B60J 7/10

(54) **Sliding trolley for tarpaulin sheet for a lorry**
Schiebe-Aufhängung für Plane für Lastkraftwagen
Chariot coulissant pour bâche de camion

(30) Priority: 19.02.1999 IT MI990346
(43) Date of publication of application: 23.08.2000
(73) Proprietor: Autocar S.p.A., 20129 Milan (IT)
(72) Inventor: Antonelli, Vincenzo Antonio, 20064 Gorgonzola (Milan) (IT)
(74) Representative: Gervasi, Gemma, Dr.

(56) References cited:
- EP-A- 0 153 030
- DE-U- 8 709 691
- DE-U- 29 820 721

## Description

### Field of invention

The invention consists of a sliding trolley for horizontal displacement of the tarpaulin for a lorry according to claim 1.

### Prior art

Lorries of any size and carrying capacity, including semitrailers, are normally equipped with a covering (consisting of a plurality of tarpaulin supported by a frame fixed to the flatbed of the lorry) which protects the goods loaded on the lorry (above all) from bad weather conditions and which must be at least partially removed to enable the operations of loading and unloading of the lorry.

Many solutions are known for removing one of the tarpaulin that close the loading compartment of a lorry at the sides. The simplest solution consists in manually rolling up the tarpaulin and in fastening it by means of straps or equivalent means to the horizontal beam (belonging to the frame supporting the covering) from which the tarpaulin itself hangs.

The weight of the sheet and the overall dimensions of the tarpaulin when it is rolled up allow this solution to be adopted only for small-sized lorries.

To cover large-sized lorries and/or semitrailers for general use (i.e., ones not designed to transport particular types of goods that require specific equipment, such as a refrigerating cell), normally side tarpaulin are used which are supported by horizontal beams (belonging to the framework supporting the covering), from which they hang via means (normally trolleys made of plastic material) which slide in guides fixed to (or else integral with) the said supporting horizontal beam. The tarpaulin is therefore caused to slide horizontally along the said guides and is gathered up at one of the side uprights of the supporting frame.

Horizontally sliding sheets of the known type present a number of drawbacks, amongst which the fact that, when they are in use, the sheet is normally anchored to the flatbed of the lorry and tightened to reduce resistance to motion during travel. The vertical stresses that derive therefrom are discharged (almost) totally on the trolleys, causing serious damage to the latter in a (relatively) short time.

Such vertical stresses are (or may be) particularly strong if the lorry is without side boards and the job of keeping the load in place is entrusted to the covering sheets.

In an attempt to overcome the above-mentioned drawback, trolleys are used which comprise pairs of wheels connected by a pin from which the tarpaulin hangs (either directly or else by means of a bracket or other equivalent means): the vertical forces exerted by the tarpaulin on the trolley are distributed between the wheels of each pair but in any case cause shearing stress on the connecting pin, which undergoes deformation (or may undergo deformation) and may possibly break, especially as a result of very violent stressings.

In addition, the horizontal supporting beam has (or carries) at least one guide in which the aforesaid trolleys comprising pairs of wheels slide, and consequently has a non-negligible width and protrudes inside the loading compartment, of which it limits the loading space.

A sliding trolley for the tarpaulin of a lorry, comprising a double-wheeled trolley and a rectilinear bracket to which the tarpaulin is fixed, is known - for example - from EP 153.030.

The sliding trolley which forms the subject of the present invention enables the aforementioned drawbacks to be overcome since the vertical stresses are "discharged" totally on the supporting beam, without exerting stress on the trolleys, which may be of the single-wheeled type, so reducing the overall dimensions of the horizontal beam.

### Summary of invention

The subject of the present invention is a sliding trolley for the tarpaulin of a lorry, comprising a bracket to which the tarpaulin is fixed and, combined together, the following items:
- said bracket, comprising a rectilinear portion and a "goose-neck" portion;
- a single-wheeled trolley, which is carried through a pin by the rectilinear portion of said bracket and which slides in a first longitudinal groove made in a horizontal supporting beam belonging to the supporting frame of said tarpaulin; and
- means (preferably but not necessarily consisting of a sliding block) which are fixed to the end of the "goose-neck" portion of said bracket and which are suitable to slide in a second longitudinal groove made in said supporting beam above said first longitudinal groove.

The pin which carries the single-wheeled trolley slides in a vertical slot made in the rectilinear portion of said bracket and a force is exerted on said pin by an elastic element which is fixed to or is integral with said bracket.

### List of figures

The invention will now be described in greater detail with reference to a nonlimiting example of embodiment illustrated in the attached figures, in which:
- Figure 1 is a schematic representation of a side view of the top part of a supporting beam carrying a trolley according to the invention;
- Figures 2 and 3 present, respectively, a side cross-sectional view and a front view of a bracket belonging to the trolley of Figure 1;
- Figure 4 shows, in cross section, an enlarged side view of the rectilinear portion of the bracket, which has the vertical slot in which the pin of the single-wheeled trolley, on which a force is exerted by a spring fixed to the bracket, slides;
- Figure 5 is a front view of the spring illustrated in Figure 4; and
- Figure 6 is a schematic representation of a side view, a top view, and a cross section of a sliding block which constitutes the sliding means of the trolley of Figure 1.

In the attached figures, corresponding items are designated by the same numerical references.

### Detailed description

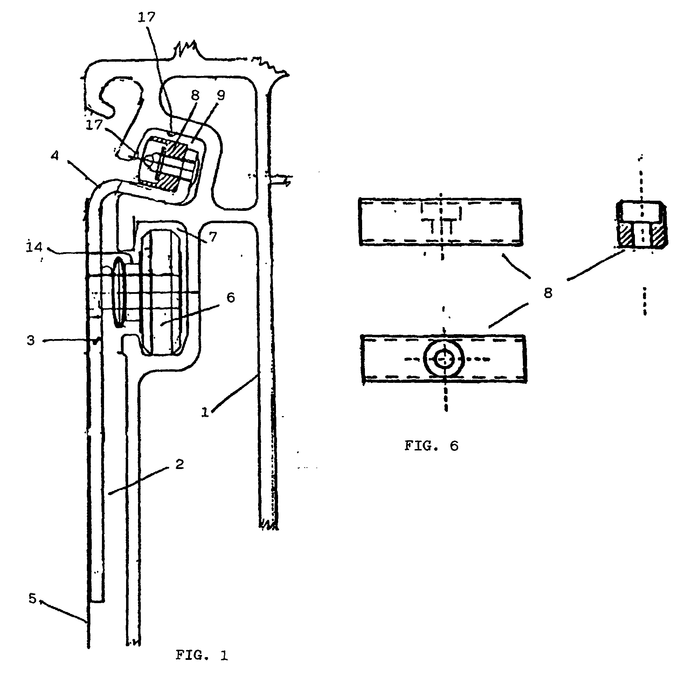

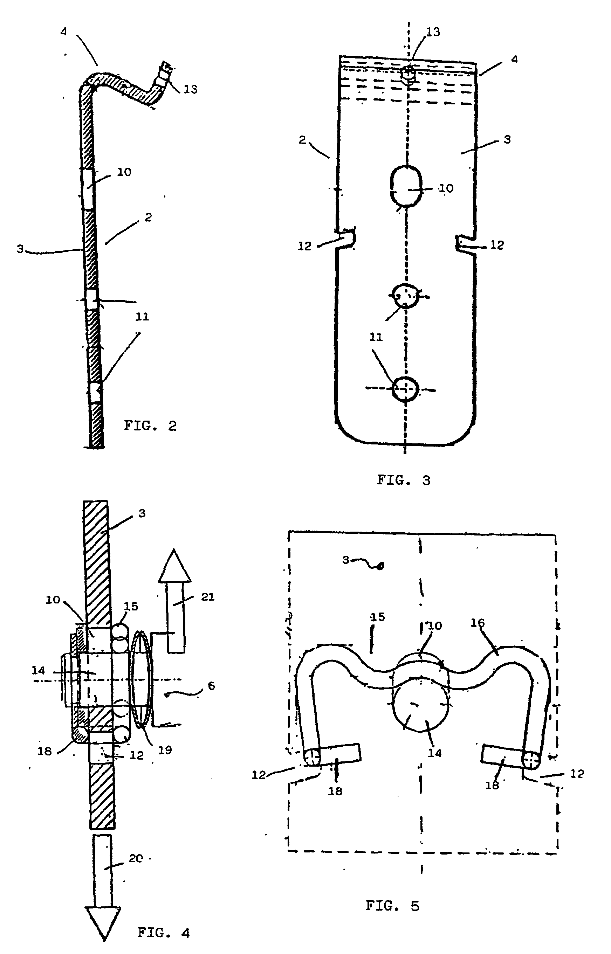

Figure 1 is a schematic representation of a side view of the top part of the horizontal supporting beam 1 carrying a trolley according to the invention, which comprises, combined together, the following items:
- a bracket 2, to which the tarpaulin 5 is fixed in a way in itself known; the bracket 2 comprises a rectilinear portion 3 and a "goose-neck" portion 4, which are more clearly visible in Figures 2 and 3;
- a single-wheeled trolley 6, which is carried by the rectilinear portion 3 of the bracket 2 and which slides in a first longitudinal groove 7 made in the supporting beam 1; and
- sliding means 8 (consisting, in the example of embodiment described herein, of a sliding block - Figure 6), which are fixed to the end of the "goose-neck" portion 4 of the bracket 2 and which slide in a second longitudinal groove 9 made in the supporting beam 1 above the first longitudinal groove 7.

The pin 14 carrying the single-wheeled trolley 6 slides in a vertical slot 10 made in the rectilinear portion 3 of the bracket 2, and a force is exerted on the pin 14 by the spring 15 which is fixed to or integral with the rectilinear portion 3 of the bracket 2 (Figures 4 and 5).

The solution of using a single-wheeled trolley enables a reduction in the overall dimensions of the horizontal beam 1 as compared to the overall dimensions of the supporting beams used previously and designed to carry at least one trolley comprising a pair of wheels.

In the preferred embodiment described herein, on at least one internal wall of the second longitudinal groove 9, a longitudinal ribbing 17 is present, on which the sliding block 8 rests during the phases of opening and closing of the tarpaulin 5 (or anyway when the tarpaulin 5 is not in tension) to reduce the area of contact (and, consequently, of friction) between the sliding block 8 and the inner wall of the groove 9, and thus facilitate horizontal displacement of the tarpaulin 5.

Figures 2 and 3 present, respectively, a side cross-sectional view and a front view of the bracket 2 belonging to the trolley of Figure 1.

In the "goose-neck" portion 4 of the bracket 2, the through hole 13 is visible in which a second pin (which may be seen in Figure 1), fixing the sliding block to the bracket 2, is inserted. In the rectilinear portion 3 of the bracket 2, the following may be seen: the vertical slot 10, in which the pin 14 of the single-wheeled trolley 6 slides (Figures 4 and 5), and a pair of grooves, 12 made along the side edges of the rectilinear portion 3, in which the ends 18 of the spring 15, which are bent in a Z-like fashion (Figures 4 and 5) engage.

The tarpaulin sheet 5 (not shown in Figures 2 and 3 for reasons of simplicity of graphical representation) is fastened to the bracket 2 by means of bolts inserted into the through holes 11 and of a possible fixing plate, not shown in the attached figures for reasons of simplicity of graphical representation.

Without departing from the scope of the invention, it is possible to replace the bolts inserted into the through holes 11 and the possible fixing plate, as well as the ends 18, bent back in Z-like fashion, of the spring 15, with other functionally equivalent hooking means, which are not described herein because they are known per se.

Figure 4 shows, in cross section, an enlarged side view of the rectilinear portion 3 of the bracket 2, which has the vertical slot 10 in which the pin 14 of the single-wheeled trolley 6, on which a force is exerted by a spring 15, slides, as may be better seen in Figure 5.

Figure 4 moreover shows the ends 18, bent back in a Z-like fashion, of the spring 15 and a spring washer 19 mounted on the pin 14 between the spring 15 and the wheel belonging to the trolley 6.

Without departing from the scope of the invention, it is, however, possible to omit the spring washer 19.

Figure 5 is a front view of the spring 15 illustrated in Figure 4. In Figure 5 the following may be seen: the body 16 of the spring 15 which has a "three-arched" shape, and the ends 18, bent back in Z-like fashion, of the spring 15, the pin 14 of the single-wheeled trolley 6 set under the central arch of the body 16 of the spring 15, and, in see-through view, the part of the rectilinear portion 3 of the bracket 2 which has the slot 10 and the grooves 12.

As may be seen also in Figure 4, the means for hooking of the spring 15 to the rectilinear portion 3 of the bracket 2 consists of the ends 18, bent back in Z-like fashion, of the spring itself.

Figure 6 is a schematic representation of a side view, a top view, and a cross section of an embodiment of the sliding means 8 (belonging to the trolley of Figure 1), made up of a sliding block having the shape of a parallelepiped with square cross section, in the central portion of which are present a through hole and a groove that are suitable to receive the pin for fixing the sliding block 8 to the "goose-neck" portion 4 of the bracket 2, as well as the means for fixing the above-mentioned pin to the sliding block 8, which are not described explicitly herein because they are known per se and in any case extraneous to the present invention.

The operation of the sliding trolley which forms the subject of the present invention will now be described briefly with reference to the attached figures, and in particular Figures 1, 4 and 5.

Figure 1 shows the configuration of the aforementioned trolley when the tarpaulin 5, tightened, pulls the bracket 2 downwards (Figure 4, arrow 20). The pin 14 of the single-wheeled trolley 6 slides in the vertical slot 10 of the bracket 2, so moving upwards with respect to the bracket 2 (Figure 4, arrow 21) and "loading" the spring 15, whilst the bottom part of the "goose-neck" portion 4 of the bracket 2 comes into contact with the lower edge of the second groove 9 of the supporting beam 1, as illustrated in Figure 1.

The vertical stresses are therefore supported exclusively by the supporting beam 1 (suitably sized so as to withstand such stresses), whilst the single-wheeled trolley 6 is (almost) completely "unloaded", in that it is subjected only to the elastic reaction of the spring 15, and (unlike hitherto known trolleys) does not run any risk of being damaged by the vertical stresses transmitted by the sheet 5 to the bracket 2.

For proper operation of a trolley according to the invention, the vertical slot 10 must be located in the rectilinear portion 3 of the bracket 2 so as to be in a point corresponding to the pin 14, and its length must be such as to enable the pin 14 to perform a travel not shorter than the distance between the bottom surface of the "goose-neck" portion 4 of the bracket 2 and the bottom edge of the second groove 9 of the supporting beam 1 when the tarpaulin 5 is not tensioned.

When, instead, the tarpaulin 5 is not tensioned (for example, because it is not anchored to the flatbed of the lorry), the elastic reaction of the spring 15 exerts a force on the bracket 2 to force it to move upwards with respect to the pin 14 of the single-wheeled trolley 6, which slides freely in the vertical slot 10 of the bracket 2 to assume the position schematically indicated in Figure 5. The displacement upwards of the bracket 2 causes the "goose-neck" portion 4 of the bracket 2 to move away from the bottom edge of the second groove 9 of the supporting beam 1, so enabling an easy horizontal displacement of the tarpaulin 5 carried by the single-wheeled trolley 6, which slides in the first longitudinal groove 7 of the supporting beam 1.

The sliding block 8 prevents the "goose-neck" portion 4 of the bracket 2 from accidentally coming out of the groove 9 when the tarpaulin 5 is not tightened. In order to prevent, during horizontal displacement of the tarpaulin 5, the sliding block 8 from scraping accidentally against the inside walls of the groove 9, in the preferred embodiment described herein the sliding block 8 rests on the longitudinal ribbing 17 present on at least one internal wall of the second longitudinal groove 9.

Without departing from the scope of protection of the present invention, it is possible for a person skilled in the art to make to the sliding trolley for the tarpaulin sheet of a lorry, which forms the subject of the present description, all those modifications and improvements suggested by normal experience and by the natural evolution of technology.

## Claims

1. A sliding trolley for a tarpaulin (5) for a lorry, comprising a bracket (2) to which the tarpaulin (5) is fixed and **characterised in that** it comprises, combined together, the following items:
- said bracket (2), comprising a rectilinear portion (3) and a "goose-neck" portion (4);
- a single-wheeled trolley (6), which is carried through a pin (14) by the rectilinear portion (3) of said bracket (2) and which slides in a first longitudinal groove (7) made in a horizontal supporting beam (1) belonging to the supporting frame of said tarpaulin (5); and
- sliding means (8), which are fixed to the end of the "goose-neck" portion (4) of said bracket (2) and which are suitable to slide in a second longitudinal groove (9) made in said supporting beam (1) above said first longitudinal groove (7);
further **characterised in that** said pin (14) which carries the single-wheeled trolley (6) slides in a vertical slot (10) made in the rectilinear portion (3) of said bracket (2) and **in that** a force is exerted on said pin (14) by an elastic element (15) which is fixed to or is integral with said bracket (2).

2. Sliding trolley according to Claim 1, **characterised in that** said vertical slot (10), located on the rectilinear portion (3) of said bracket (2) in a point corresponding to said pin (14), is suitable to allow said pin (14) to perform a travel not shorter than the distance between the bottom surface of the "goose-neck" portion (4) of said bracket (2) and the bottom edge of said second groove (9) of said supporting beam (1) when said tarpaulin (5) is not tightened.

3. Sliding trolley according to Claim 1, **characterised in that** said sliding means (8) are represented by a sliding block.

4. Sliding trolley according to Claim 1, **characterised in that** the rectilinear portion (3) of said bracket (2) comprises a pair of grooves (12) made along its side edges, which are suitable to receive the hooking means belonging to said elastic element (15).

5. Sliding trolley according to Claim 1, **characterised in that** said elastic element (15) consists of a spring comprising a body (16) which has a "three-arched" shape and has its ends (18) bent back in Z-like fashion, the central arch of said body (16) of said elastic element (15) being in contact with the top part of said pin (14) of said single-wheeled trolley (6).

6. Sliding trolley according to Claims 4 and 5, **characterised in that** said means hooking said elastic element (15) to said bracket (2) consist of the ends (18) of said elastic element (15) bent back in Z-like fashion.

7. Sliding trolley according to Claim 1, **characterised in that** said sliding means (8) are fixed to said bracket (2) through a second pin and **in that** the "goose-neck" portion (4) of said bracket (2) has a through hole (13) suitable to receive said second pin fixing said sliding means (8) to the end of the "goose-neck" portion (4) of said bracket (2).

8. Sliding trolley according to Claim 1, **characterised in that** on at least one internal wall of said second longitudinal groove (9) a longitudinal ribbing (17) is present, on which said sliding means (8) rest when said tarpaulin (5) is not tightened.

## Patentansprüche

1. Eine Schiebeaufhängung für eine Plane (5) für Lastkraftwagen, bestehend aus einem Träger (2), an dem die Plane befestigt ist, **gekennzeichnet dadurch, dass** sie sich aus einer Kombination der folgenden Elemente zusammensetzt:
- dem Träger (2), der einen geradlinigen Teil (3) und einen Teil in Form eines S-Bogens (4) besitzt;
- einer Transportrolle (6), die über einen Bolzen (14) vom geradlinigen Teil (3) des Trägers (2) getragen wird und in einer ersten Rinne (7) in Längsrichtung gleitet, wobei die Rinne (7) in einem waagerechten tragenden Balken (1) des Tragegestells der Plane (5) verläuft;
- einer Gleitvorrichtung (8), die am Ende des S-förmigen Teils (4) des Trägers (2) angebracht ist und in einer zweiten Rinne (9) in Längsrichtung gleiten kann, wobei die Rinne (9) im tragenden Balken (1) über der Rinne (7) verläuft;
weiter ist die Schiebeaufhängung **dadurch gekennzeichnet, dass** der Bolzen (14), der die Transportrolle (6) trägt, entlang eines senkrechten Schlitzes (10) im geradlinigen Teil (3) des Trägers (2) gleitet und dass auf den Bolzen (14) durch ein elastisches Element (15), das am Träger (2) befestigt oder in einem Stück mit ihr ist, eine Kraft ausgeübt wird.

2. Eine Schiebeaufhängung entsprechend Anspruch 1 **gekennzeichnet dadurch, dass** der senkrechte Schlitz (10), der im geradlinigen Teil (3) des Trägers (2) an einem Punkt verläuft, der dem Bolzen (14) entspricht, dem Bolzen (14) einen Weg erlaubt, der wenigstens so lang ist wie der Abstand zwischen dem unteren Ende des S-förmigen Teils (4) des Trägers (2) und dem unteren Rand der zweiten Rinne (9) im tragenden Balken (1), wenn die Plane (5) nicht gespannt ist.

3. Eine Schiebeaufhängung entsprechend Anspruch 1 **gekennzeichnet dadurch, dass** die Gleitvorrichtung (8) ein Gleitschuh ist.

4. Eine Schiebeaufhängung entsprechend Anspruch 1 **gekennzeichnet dadurch, dass** entlang der seitlichen Ränder des geradlinigen Teils (3) des Trägers (2) ein Paar Rinnen (12) verläuft, die die Hakvorrichtung des elastischen Elements (15) aufnehmen können.

5. Eine Schiebeaufhängung entsprechend Anspruch 1 **gekennzeichnet dadurch, dass** das elastische Element (15) aus einer Feder besteht mit einem dreifach gebogenen Körper (16), dessen enden (18) Z-förmig zurückgebogen sind, wobei der mittlere Bogen des Körpers (16) des elastischen Elements (15) den oberen Teil des Bolzens (14) der Transportrolle (6) berührt.

6. Eine Schiebeaufhängung entsprechend den Ansprüchen 4 und 5 **gekennzeichnet dadurch, dass** die Vorrichtung, die das elastische Element (15) am Träger (2) einhakt, aus den Z-förmig zurückgebogenen Enden (18) des elastischen Elements (15) besteht.

7. Eine Schiebeaufhängung entsprechend Anspruch 1 **gekennzeichnet dadurch, dass** die Gleitvorrichtung (8) am Träger (2) mit einem zweiten Bolzen befestigt ist und dass der S-förmige Teil (4) des Trägers (2) mit einem hindurchgehenden Loch (13) versehen ist, das den zweiten Bolzen, mit dem die Gleitvorrichtung (8) am Ende des S-förmigen Teils (4) des Trägers (2) befestigt ist, aufnimmt.

8. Schiebeaufhängung entsprechend Anspruch 1 **gekennzeichnet dadurch, dass** wenigstens an einer Innenwand der zweiten in Längsrichtung verlaufenden Rinne (9) eine Rippe (17) vorhanden ist, auf der die Gleitvorrichtung (8) ruht, wenn die Plane (5) nicht gespannt ist.

## Revendications

1. Chariot coulissant pour une bâche (5) destinée à un camion, comportant une patte (2) à laquelle est fixée la bâche (5), et **caractérisé en ce qu'**il comporte, combinés ensemble, les éléments suivants :
- ladite patte (2) comportant une partie rectiligne (3) et une partie en "col de cygne" (4),
- un chariot à roue unique (6) qui est supporté par l'intermédiaire d'une broche (14) par la partie rectiligne (3) de ladite patte (2) et qui coulisse dans une première gorge longitudinale (7) réalisée dans une poutre de support horizontale (1) appartenant au cadre de support de ladite bâche (5), et
- des moyens coulissants (8), qui sont fixés à l'extrémité de la partie en "col de cygne" (4) de ladite patte (2), et qui sont adaptés pour coulisser dans une seconde gorge longitudinale (9) réalisée dans ladite poutre de support (1) au-dessus de ladite première gorge longitudinale (7),
**caractérisé en outre en ce que** ladite broche (14), qui supporte le chariot à roue unique (6), coulisse dans une fente verticale (10) réalisée dans la partie rectiligne (3) de ladite patte (2), et **en ce qu'**une force est exercée sur ladite broche (14) par un élément élastique (15), qui est fixé sur ladite patte (2), ou qui est formé en un seul bloc avec celle-ci.

2. Chariot coulissant selon la revendication 1, **caractérisé en ce que** ladite fente verticale (10), positionnée sur la partie rectiligne (3) de ladite patte (2) dans un point correspondant à ladite broche (14), est adaptée pour permettre à ladite broche (14) d'effectuer un trajet pas plus court que la distance entre la surface inférieure de la partie en "col de cygne" (4) de ladite patte (2) et le bord inférieur de ladite seconde gorge (9) de ladite poutre de support (1), lorsque ladite bâche (5) n'est pas serrée.

3. Chariot coulissant selon la revendication 1, **caractérisé en ce que** lesdits moyens coulissants (8) sont représentés par un bloc coulissant.

4. Chariot coulissant selon la revendication 1, **caractérisé en ce que** la partie rectiligne (3) de ladite patte (2) comporte une paire de gorges (12) réalisées le long de ses bords latéraux, lesquelles sont adaptées pour recevoir les moyens d'accrochage appartenant audit élément élastique (15).

5. Chariot coulissant selon la revendication 1, **caractérisé en ce que** ledit élément élastique (15) est constitué d'un ressort comportant un corps (16) qui a une forme "à trois arcs", et a ses extrémités (18) incurvées en arrière d'une manière analogue à un Z, l'arc central dudit corps (16) dudit élément élastique (15) étant en contact avec la partie supérieure de ladite broche (14) dudit chariot à roue unique (6).

6. Chariot coulissant selon les revendications 4 et 5, **caractérisé en ce que** lesdits moyens d'accrochage dudit élément élastique (15) sur ladite patte (2) sont constitués des extrémités (18) dudit élément élastique (15) incurvées en arrière d'une manière analogue à un Z.

7. Chariot coulissant selon la revendication 1, **caractérisé en ce que** lesdits moyens coulissants (8) sont fixés sur ladite patte (2) par l'intermédiaire d'une seconde broche, et **en ce que** la partie en "col de cygne" (4) de ladite patte (2) comporte un trou traversant (13) adapté pour recevoir ladite seconde broche fixant lesdits moyens coulissants (8) sur l'extrémité de la partie en "col de cygne" (4) de ladite patte (2).

8. Chariot coulissant selon la revendication 1, **caractérisé en ce qu'**un cordon longitudinal (17) est agencé sur au moins une paroi intérieure de ladite seconde gorge longitudinale (9), sur lequel lesdits moyens coulissants (8) sont en appui lorsque ladite bâche (5) n'est pas serrée.
